(19) Europäisches Patentamt
European Patent Office
Office européen des brevets

(11) **EP 4 693 676 A1**

(12) **EUROPEAN PATENT APPLICATION**
published in accordance with Art. 153(4) EPC

(43) Date of publication:
**11.02.2026  Bulletin 2026/07**

(21) Application number: **24824378.4**

(22) Date of filing: **14.08.2024**

(51) International Patent Classification (IPC):
***H01M 50/342*** (2021.01)

(52) Cooperative Patent Classification (CPC):
**H01M 50/3425;** Y02E 60/10

(86) International application number:
**PCT/CN2024/112005**

(87) International publication number:
**WO 2025/241327 (27.11.2025 Gazette 2025/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **22.05.2024  CN 202421134766 U**

(71) Applicant: HUIZHOU EVE POWER CO., LTD
**Huizhou, Guangdong 516039 (CN)**

(72) Inventors:
• **WANG, Jing**
  **Huizhou, Guangdong 516039 (CN)**
• **SHU, Kuanjin**
  **Huizhou, Guangdong 516039 (CN)**
• **DUAN, Dong**
  **Huizhou, Guangdong 516039 (CN)**
• **LIU, Ziwen**
  **Huizhou, Guangdong 516039 (CN)**
• **HE, Wei**
  **Huizhou, Guangdong 516039 (CN)**

(74) Representative: **Berggren Oy**
**P.O. Box 16**
**Fabianinkatu 21**
**00101 Helsinki (FI)**

(54) **PROTECTIVE FILM, COVER PLATE ASSEMBLY AND BATTERY**

(57)    The present application provides a protective film (100), a cover assembly, and a battery cell. The protective film (100) includes a first film layer (1) provided with an installation surface (1A) located on one side of first film layer (1); an adhesive layer (2) attached to the installation surface (1A) and including a first area (21) and a second area (22) surrounding the first area (21); and a second film layer (3) disposed on one side of the adhesive layer (2) away from the first film layer (1) and located in the first area (21). The second area (22) of the adhesive layer (2) is configured to connect with a top cover (7) of a battery cell.

FIG. 2

EP 4 693 676 A1

**Description**

This application claims priority to Chinese Patent Application No. 202421134766.4 filed on May 22, 2024. The disclosure of the aforementioned application is incorporated herein by reference in its entirety.

TECHNICAL FIELD

The present disclosure relates to the technical field of batteries, and in particular, to a protective film, a cover assembly, and a battery cell.

BACKGROUND ART

In related arts, in order to prevent sharp objects from damaging an explosion-proof valve or prevent foreign objects and dust from falling into the explosion-proof valve, it is necessary to install an explosion-proof valve film on an upper surface of the explosion-proof valve. Generally, the explosion-proof valve film is glued to a top cover of a battery cell. A usual method is to apply glue to an entire surface of the explosive proof valve film or to apply annular glue to the explosive proof valve film.

SUMMARY OF THE INVENTION

The method of applying glue on the entire surface of the explosion-proof valve film may cause the explosion-proof valve film to be sucked back to bond with the explosion-proof valve under conditions of thermal expansion and cold contraction and negative pressure, making the explosion-proof valve film uneven and easy to fall off. The method of applying annular glue on an adhesive surface of the explosion-proof valve film is to apply glue on an entire adhesive surface of the explosion-proof valve and then remove part of the glue to form the annular glue, complicating a pasting process of the explosion-proof valve film. Meanwhile, compared with the method of applying glue to the entire surface of the explosion-proof valve film, the method of applying annular glue to the adhesive surface of the explosion-proof valve film also requires higher precision of equipment, which in turn increases the costs.

In a first aspect, this application provides a protective film, including:

a first film layer provided with an installation surface located on one side of the first film layer;
an adhesive layer attached to the installation surface and including a first area and a second area surrounding the first area; and
a second film layer disposed on one side of the adhesive layer away from the first film layer and located in the first area.

The second area of the adhesive layer is configured to connect with a top cover of a battery cell.

In a second aspect, the present application provides a cover assembly, including:

a top cover provided with an installation hole;
an explosion-proof valve disposed in the installation hole; and
the protective film of the first aspect. The protective film is covered on the installation hole, and the second area of the adhesive layer is connected to the top cover.

In a third aspect, the present application provides a battery cell, including the cover assembly of the second aspect.

BENEFICIAL EFFECTS

In the protective film, the cover assembly, and the battery cell provided by the present application, a first film layer, an adhesive layer, and a second film layer are stacked in sequence to form the protective film. The second film layer covers a first area of the adhesive layer. Since the second film layer is located between the adhesive layer and an explosion-proof valve, when the protective film is sucked back under conditions of thermal expansion and cold contraction and negative pressure, it can relieve the problem of adhesive bonding between the protective film and the explosion-proof valve caused by direct contact between the adhesive layer and the explosion-proof valve. Moreover, since the adhesive layer is full-surface and not annular, compared with the method of applying the annular glue on the explosion-proof valve film in the related arts, the technical solutions of the present application eliminate the need to remove part of the explosion-proof valve film, that is, there is no need to remove part glue of the adhesive layer located in the first area, thereby reducing the process before the protective film is pasted to the top cover of the battery cell, and reducing production costs of the protective film.

DESCRIPTION OF THE DRAWINGS

FIG. 1 is a schematic three-dimensional view of a protective film provided by an embodiment of the present application from a perspective view;
FIG. 2 is a schematic three-dimensional view and a partially enlarged view of a protective film provided by an embodiment of the present application from another perspective;
FIG. 3 is a schematic structural diagram and a partially enlarged view of a protective film provided by an embodiment of the present application;
FIG. 4 is a schematic structural diagram of an adhesive layer provided by an embodiment of the present application;
FIG. 5 is a schematic structural diagram of a first film layer provided by an embodiment of the present application;

FIG. 6 is an enlarged schematic diagram of section A in FIG. 5; and

FIG. 7 is an exploded schematic diagram of a cover assembly provided by an embodiment of the present application.

Reference numbers:

100, protective film; 1, first film layer; 1A, installation surface; 2, adhesive layer; 21, first area; 211, first sub-area; 212, second sub-area; 22, second area; 3, second film layer; 4, boundary line; 5, edge line; 6, ventilation hole; 61, hole segment; 7, top cover; 8, installation hole; and 9, explosion-proof valve.

## IMPLEMENTATION MODES OF THE INVENTION

In the present application, unless otherwise specified, orientational terms used such as "upper" and "lower" usually refer to upper and lower positions of a device in actual use or working state, and specifically orientations in the drawings., while the terms "inside" and "outside" refer to a position relative to an outline of the device.

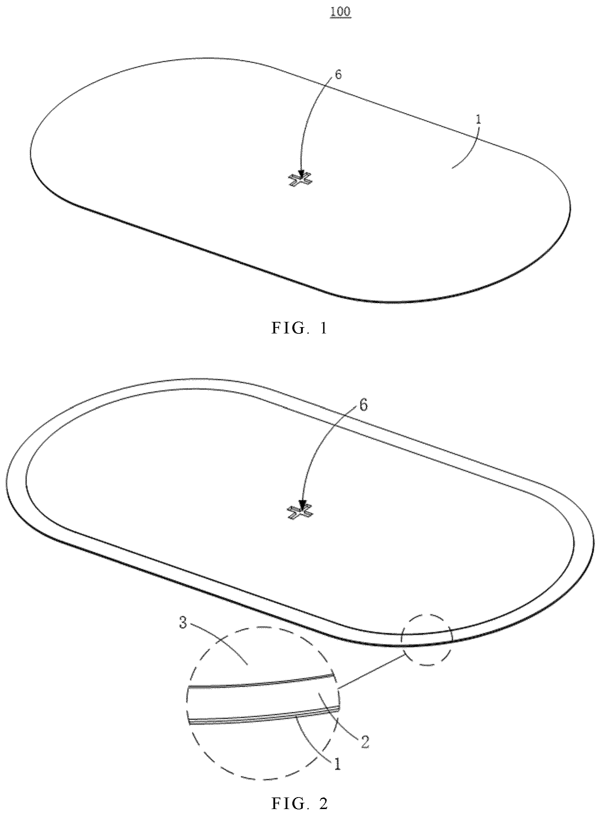

The present application provides a protective film, and FIG. 1 to FIG. 6 illustrate some embodiments of the present application.

Please refer to FIG. 1 to FIG. 3. In some embodiments of the present application, a protective film 100 includes a first film layer 1. The first film layer 1 is provided with an installation surface 1A. The installation surface 1A is located on one side of the first film layer 1. The installation surface 1A faces a top cover 7 of the battery cell.

In some embodiments of the present application, the protective film 100 further includes an adhesive layer 2, and the adhesive layer 2 is attached to the installation surface 1A. The adhesive layer 2 may cover an entire surface of the installation surface 1A, or may also cover a part of the installation surface 1A, and there is no limitation here. In a specific embodiment of the present application, the adhesive layer 2 is provided on an entire surface of the installation surface 1A. When a corresponding glue coating operation is performed, manually or equipment, on the first film layer 1, there is no need to control a coating range, and the adhesive layer 2 is ensured to be coated on the entire surface of the installation surface 1A. Compared with the method of applying the annular glue in the related arts, a process of removing part of glue is omitted. Moreover, the adhesive layer 2 is disposed on the entire surface of the installation surface 1A, so that the first film layer 1 and the adhesive layer 2 may also be produced by die-cutting, and a combined structure of the first film layer 1 and the adhesive layer 2 as shown in in the embodiment of the present application is directly formed after die-cutting.

The adhesive layer 2 includes a first area 21 and a second area 22 surrounding the first area 21. The second film layer 3 is disposed on one side of the adhesive layer 2 away from the first film layer 1 and is located in the first area 21. That is, a part of the adhesive layer 2 located in the first area 21 can bond the first film layer 1 and the second film layer 3 to form the protective film 100. Another part of the adhesive layer 2 located in the second area 22 is in an exposed state and is configured to bond with the top cover 7 of the battery cell, so as to realize a connection between the protective film 100 and the top cover 7 of the battery cell, so that the protective film 100 can protect the explosion-proof valve 9 in the top cover 7.

In technical solutions of the present application, the first film layer 1, the adhesive layer 2, and the second film layer 3 are stacked in sequence to form the protective film 100. The second film layer 3 covers the first area 21 of the adhesive layer 2. Since the second film layer 3 is located between the adhesive layer 2 and the explosion-proof valve 9, when the protective film 100 is sucked back under conditions of thermal expansion and cold contraction and negative pressure, it can relieve the problem of adhesive bonding between the protective film 100 and the explosion-proof valve 9 caused by direct contact between the adhesive layer 2 and the explosion-proof valve 9. Moreover, since the adhesive layer 2 is full-surface and not annular, compared with the method of applying the annular glue on the explosion-proof valve film in the related arts, the technical solutions of the embodiments of the present application eliminate the need to remove part glue of the explosion-proof valve film, that is, there is no need to remove the part of the adhesive layer 2 located in the first area 21, thereby reducing the process before the protective film 100 is pasted to the top cover 7 of the battery cell, and reducing production costs of the protective film 100.

In addition, the protective film 100 in the embodiments of the present application adopts a multi-layer film stacking form, that is, the first film layer 1 and the second film layer 3 are laminated together through the adhesive layer 2 to form a double-layer film structure. The double-layer film structure increases in a thickness compared with a single-layer film, so that the existing double-layer film structure has an increased structural hardness and stronger resistance to deformation. Compared with the explosion-proof valve film in the related arts, the existing double-layer film structure is less prone to deformation and can effectively maintain an initial shape under conditions of thermal expansion and cold contraction and negative pressure.

It can be understood that in order to ensure a protective effect of the protective film 100 on the explosion-proof valve 9, the protective film 100 has a certain tensile strength and flexibility. In an embodiment of the present application, a material of the first film layer 1 is one of polyethylene glycol terephthalate (PET), polyethylene (PE), and polyimide (PI). In another embodiment of the present application, a material of the second film layer 3 is one of polyethylene glycol terephthalate (PET), polyethylene (PE), and polyimide (PI).

In order to ensure the tensile strength and flexibility of the protective film 100, the present application has at least one of the two embodiments. That is to say, in a specific embodiment of the present application, the material of the first film layer 1 and the material of the second film layer 3 are both one of polyethylene glycol terephthalate (PET), polyethylene (PE), and polyimide (PI).

Since the first film layer 1 is bonded to the top cover 7 of the battery cell through the adhesive layer 2, a thickness of the adhesive layer 2 and a thickness of the first film layer 1 together increase an overall thickness of the protective film 100. At the same time, the increased overall thickness can also make the protective film 100 stick more firmly on the top cover 7 of the battery cell. In some embodiments of the present application, the thickness of the protective film 100 in a first direction is H, and the thickness of the first film layer 1 in the first direction is H1, where H and H1 satisfy: $1/3H \leq H1 \leq 2/3H$. That is to say, the thickness H1 of the first film layer 1 is set to meet this interval range, thereby meeting adhesion strength requirements of the protective film 100. When a value of H1 is less than 1/3H, the thickness of the first film layer 1 is too thin, which may cause a problem of low adhesion strength of the protective film 100. When the value of H1 is greater than 2/3H, the thickness of the first film layer 1 is too thick, thereby increasing the production costs of the protective film 100.

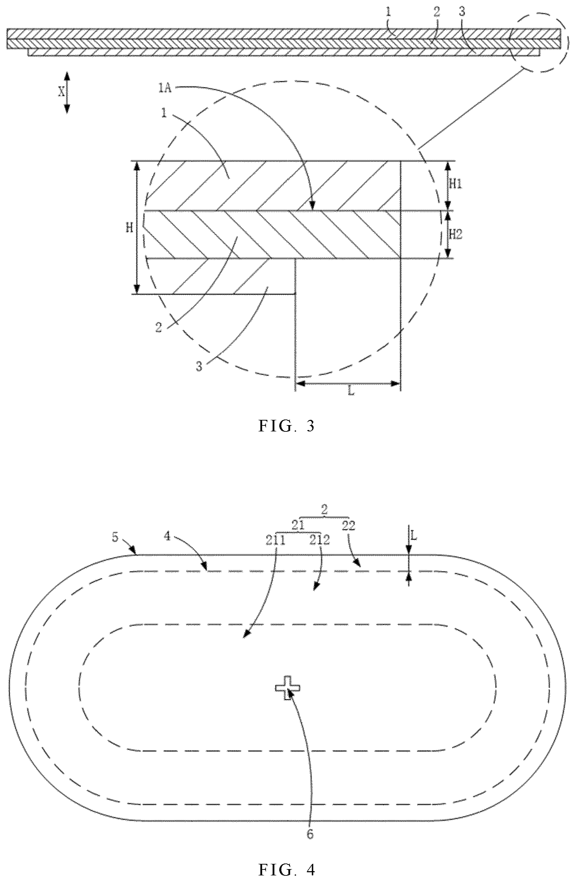

It should be noted that the first direction is an X direction in FIG. 3, that is, a stacking direction of the first film layer 1, the adhesive layer 2, and the second film layer 3. The first direction X will be used for description below.

In some embodiments of the present application, the thickness of the adhesive layer 2 in the first direction X is H2, where H and H2 satisfy: $1/3H \leq H2 \leq 2/3H$. The thickness H2 of the adhesive layer 2 is set to meet this range because the adhesive layer 2 mainly plays a bonding role. Such a setting can make the adhesive layer 2 meet the adhesive strength requirements of the protective film 100 and can also prevent the adhesive layer 2 from being too thick to affect the tensile strength and flexibility of the protective film 100. When a value of H2 is less than 1/3H, the thickness of the adhesive layer 2 is too thin, which affects an adhesive effect between the first film layer 1 and the second film layer 3 as well as an adhesive effect between the first film layer 1 and the top cover 7 of the battery cell. When the value of H2 is greater than 2/3L, the thickness of the adhesive layer 2 is too thick, which not only affects the tensile strength and flexibility of the protective film 100, but also increases the production costs of the adhesive layer 2.

In some embodiments of the present application, H also satisfies: $0.05\ mm \leq H \leq 3\ mm$. That is to say, setting H to meet this range can make the protective film 100 have excellent adhesion effect, and can also effectively reduce material costs of the protective film 100. When a value of H is less than 0.05 mm, the thickness of the protective film 100 may be too thin, which leads to a problem of poor adhesion effect. When the value of H is greater than 3 mm, the material costs of the protective film 100 increases. The value of H may be 0.05 mm, 0.10 mm, 0.20 mm, 0.30 mm, 0.40 mm, 0.50 mm, 0.60 mm, 0.70 mm, 0.80 mm, 0.90 mm, 1.00 mm, 1.10 mm, 1.20 mm, 1.30 mm, 1.40 mm, 1.42 mm, 1.45 mm, 1.47 mm, 1.50 mm, 1.60 mm, 1.70 mm, 1.80 mm, 1.90 mm, 2.00 mm, 2.10 mm, 2.20 mm, 2.30 mm, 2.40 mm, 2.50 mm, 2.60 mm, 2.70 mm, 2.80 mm, 2.90 mm, or 3.00 mm. The value of H is not limited to the listed values, and other unlisted values within this value range are also applicable.

Please refer to FIG. 3 and FIG. 4. In some embodiments of the present application, a vertical distance between a boundary line 4 of the first area 21 and the second area 22 of the adhesive layer 2 and an edge line 5 of the second area 22 of the adhesive layer 2 is L, where L satisfies: $0.1\ mm \leq L \leq 6\ mm$. It can be understood that a value of L determines an area size of the second area 22. Setting L to satisfy this range can increase a tolerance range of the protective film 100 when pasting, and can also improve the adhesion of the protective film 100.

When the value of L is less than 0.1 mm, a size of the part of the adhesive layer 2 located in the second area 22 is too small. Since the part of the adhesive layer 2 in the second area 22 is bonded to the top cover 7 of the battery cell, as a result, when the protective film 100 is pasted to a window position of the explosion-proof valve 9, a precision of positioning equipment is higher, and the tolerance range of pasting is smaller. Meanwhile, a contact area between the part of the adhesive layer 2 in the second area 22 and the top cover 7 is small, resulting in poor adhesion of the protective film 100. When the value of L is greater than 6 mm, the size of the part of the adhesive layer 2 in the second area 22 is too large, which not only has a small improvement in an anti-deformation ability of the protective film 100 under conditions of vacuum baking and negative pressure, but also increases the material costs of the protective film 100.

The value of L may be 0.1 mm, 0.3 mm, 0.5 mm, 0.7 mm, 0.9 mm, 1 mm, 1.2 mm, 1.4 mm, 1.6 mm, 1.8 mm, 2 mm, 2.2 mm, 2.4 mm, 2.6 mm, 2.8 mm, 3 mm, 3.2 mm, 3.4 mm, 3.6 mm, 3.8 mm, 4 mm, 4.2 mm, 4.4 mm, 4.6 mm, 4.8 mm, 5 mm, 5.2 mm, 5.4 mm, 5.6 mm, 5.8 mm, or 6 mm. The value of L is not limited to the listed values, and other unlisted values within this value range are also applicable.

In addition, vertical distances from different points of the boundary line 4 of the first area 21 and the second area 22 to the edge line 5 of the second area 22 may be the same or different, and there is no restriction here, as long as it can ensure that the value of L meets the range in the above embodiment. It should be added that, please referring to FIG. 4, the boundary line 4 is a dotted line pointed by an arrow with reference numeral 4 in FIG. 4.

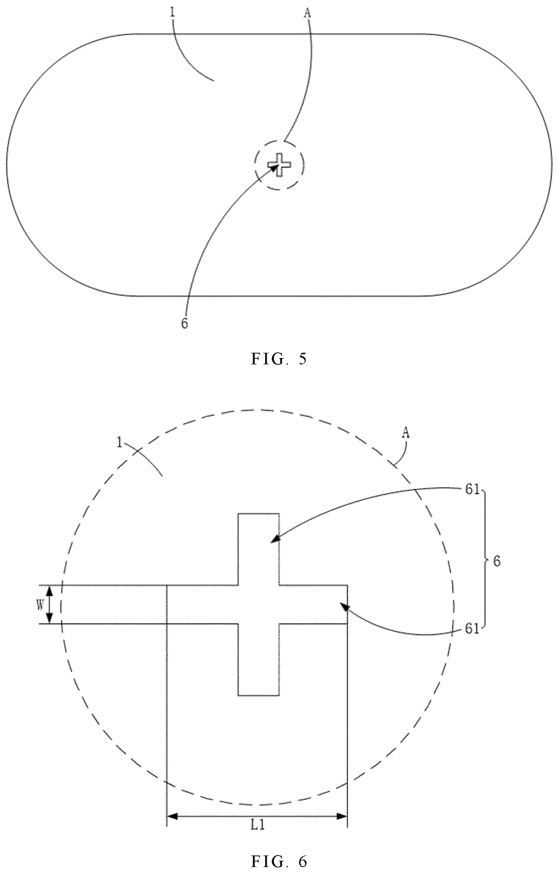

Please refer to FIG. 5. The protective film 100 is provided with at least one ventilation hole 6. The ventilation hole 6 is located in the first area 21 and penetrates the protective film 100 from the first film layer 1 to the second film layer 3. The arrangement of the ventilation hole 6 allows a space formed between the explosion-proof valve 9, the protective film 100, and the top cover 7 to maintain communication with an external environment. Thus, it is ensured that there is no pressure difference between the space formed between the explosion-proof valve 9, the protective film 100, and the top cover 7 and the external environment, and an appearance of the battery cell is prevent from being affected because of the problem of the protective film 100 being uneven and easy to fall off caused by backward suction of the protective film 100 under conditions of thermal expansion and contraction and negative pressure. It can be understood that a number of ventilation holes 6 is not limited, and may be one or multiple. Similarly, a shape of the ventilation hole 6 is not limited and may be circular, polygonal, or special-shaped.

In some embodiments of the present application, the ventilation hole 6 includes at least one hole segment 61, and the hole segment 61 is arranged in a strip shape. That is to say, the ventilation hole 6 may be composed of one hole segment 61 or a combination of multiple hole segments 61. Furthermore, the shape of the ventilation hole 6 may be a straight shape, an L shape, a cross shape, etc., and there is no restriction on this.

Please refer to FIG. 6. In some embodiments of the present application, a hole width of the hole segment 61 is W, where W satisfies: $0.05\,\text{mm} \leq W \leq 0.5\,\text{mm}$. That is to say, a value of W meeting this range can meet ventilation requirements of the protective film 100 and prevent dust and foreign objects from entering the space formed between the explosion-proof valve 9, the protective film 100, and the top cover 7. When the value of W is less than 0.05 mm, the ventilation hole 6 cannot meet the ventilation requirements of the protective film 100. When the value of W is greater than 0.5 mm, a size of the ventilation hole 6 is too large and cannot achieve a better protective effect against dust and foreign objects. The value of W may be 0.05 mm, 0.1 mm, 0.15 mm, 0.2 mm, 0.25 mm, 0.26 mm, 0.27 mm, 0.28 mm, 0.29 mm, 0.3 mm, 0.35 mm, 0.4 mm, 0.45 mm, or 0.5 mm. The value of W is not limited to the listed values, and other unlisted values within this value range are also applicable.

In some embodiments of the present application, a length of the hole segment in its extension direction is L1, where L1 satisfies: $1.5\,\text{mm} \leq L1 \leq 3\,\text{mm}$. That is, setting a value of L1 to meet this range can meet the ventilation requirements of the protective film 100 and prevent dust and foreign objects from entering the space formed between the explosion-proof valve 9, the protective film 100, and the top cover 7. When a value of L1 is greater than 3 mm, the size of the ventilation hole 6 is too large and cannot provide better protection against dust and foreign objects. At the same time, the tensile strength and flexibility of the protective film 100 may be affected by too large size of the ventilation hole 6. When the value of L1 is less than 1.5mm, the ventilation hole 6 cannot meet the ventilation requirements of the protective film 100. The value of L1 may be 1.5 mm, 1.6 mm, 1.7 mm, 1.8 mm, 1.9 mm, 2 mm, 2.1 mm, 2.2 mm, 2.22 mm, 2.24 mm, 2.26 mm, 2.28 mm, 2.3 mm, 2.4 mm, 2.5 mm, 2.6 mm, 2.7 mm, 2.8 mm, 2.9 mm, or 3 mm. The value of L1 is not limited to the listed values, and other unlisted values within this value range are also applicable.

In some embodiments of the present application, a number of hole segments 61 is multiple, and the multiple hole segments 61 intersect and communicate with each other. That is to say, in this embodiment, two hole segments 61 may intersect with each other to form the ventilation hole 6, three hole segments 61 may intersect with each other to form the ventilation hole 6, or more than three hole segments 61 may intersect with each other to form the ventilation hole 6, no further restrictions.

In a specific embodiment of the present application, the number of hole segments 61 is two, and the two hole segments 61 are arranged in a cross shape. That is, the ventilation hole 6 is a cross hole, and lengths of the two hole segments 61 in their respective extension directions are the length of the ventilation hole 6 and the width of the ventilation hole 6. On the basis that the value of W and the value of L1 of the hole segment 61 are both limited, the length and the width of the cross hole are both between 1.5 mm and 3 mm.

In addition, a position of the ventilation hole 6 is not limited and can be at any position on the protective film 100, as long as the space formed between the explosion-proof valve 9, the protective film 100, and the top cover 7 is kept communicated with the external environment. In some embodiments of the present application, the first area 21 includes a first sub-area 211 and a second sub-area 212 arranged surrounding the first sub-area 211. The second sub-area 212 is located between the first sub-area 211 and the second area 22. The ventilation hole 6 is located in the first sub-area 211. The second area 22 is an edge area of the protective film 100. This arrangement prevents an opening position of the ventilation hole 6 from being close to the second area 22. When the protective film 100 is sucked back, the firmness of the adhesion between the part of the first film layer 1 and the top cover 7 of the battery cell is not affected, and at the same time, the aesthetics of the protective film 100 can be improved.

It should be added that, please referring to FIG. 4, a dotted line between the first sub-area 211 and the second sub-area 212 is a boundary line between the first sub-area 211 and the second sub-area 212.

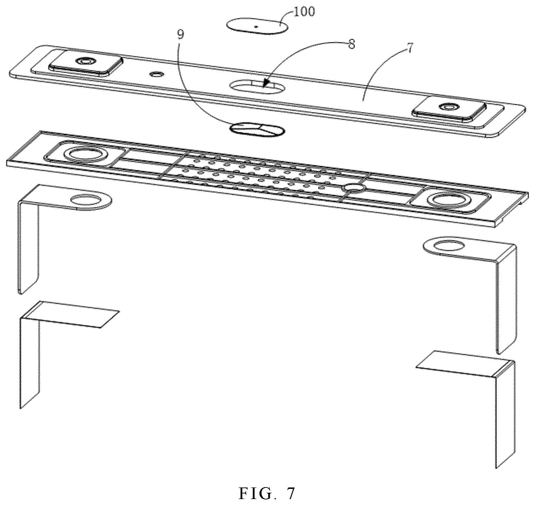

Please refer to FIG. 7. The present application also provides a cover assembly. The cover assembly includes the top cover 7, the explosion-proof valve 9, and the protective film 100. The top cover 7 is provided with an installation hole 8, and the explosion-proof valve 9 is arranged in the installation hole 8. The protective film 100 is as above, and the protective film 100 covers on the installation hole 8. The second area 22 of the adhesive layer 2 is connected to the top cover 7. Since this cover assembly adopts all the technical solutions of all the above-mentioned embodiments, the cover assembly has at least the beneficial effects brought by the technical solutions of the above-mentioned embodiments, which will not be described again here.

The protective film 100 is covered on the installation hole 8 to protect the explosion-proof valve 9 located in the installation hole 8.

The present application also provides a battery cell. The battery cell includes the cover assembly, and the cover assembly is as described above. Since the battery cell adopts all the technical solutions of all the above embodiments, the battery cell at least has the beneficial effects brought by the technical solutions of the above embodiments, which will not be described again here.

**Claims**

1.  A protective film (100), comprising:

    a first film layer (1) provided with an installation surface (1A), wherein the installation surface (1A) is located on one side of the first film layer (1);
    an adhesive layer (2) attached to the installation surface (1A), wherein the adhesive layer (2) comprises a first area (21) and a second area (22) surrounding the first area (21); and
    a second film layer (3) disposed on one side of the adhesive layer (2) away from the first film layer (1) and located in the first area (21),
    wherein the second area (22) of the adhesive layer (2) is configured to connect with a top cover (7) of a battery cell.

2.  The protective film (100) according to claim 1, wherein in a stacking direction of the first film layer (1), the adhesive layer (2), and the second film layer (3) is a first direction, a thickness of the protective film (100) in the first direction is H, and a thickness of the first film layer (1) in the first direction is H1, where H and H1 satisfy: $1/3H \leq H1 \leq 2/3H$.

3.  The protective film (100) according to claim 1, wherein in a stacking direction of the first film layer (1), the adhesive layer (2), and the second film layer (3) is a first direction, a thickness of the protective film (100) in the first direction is H, and a thickness of the adhesive layer (2) in the first direction is H2, where H and H2 satisfy: $1/3H \leq H2 \leq 2/3H$.

4.  The protective film (100) according to claim 2 or claim 3, wherein H further satisfies: $0.05\ mm \leq H \leq 3mm$.

5.  The protective film (100) according to any one of claim 1 to claim 3, wherein a vertical distance from a boundary line (4) of the first area (21) and the second area (22) of the adhesive layer (2) to an edge line (5) of the second area (22) is L, where L satisfies: $0.1\ mm \leq L \leq 6\ mm$.

6.  The protective film (100) according to any one of claim 1 to claim 3, wherein the protective film (100) is provided with at least one ventilation hole (6), the ventilation hole (6) is located in the first area (21) and penetrates the protective film (100) from the first film layer (1) to the second film layer (3).

7.  The protective film (100) according to claim 6, wherein the ventilation hole (6) comprises at least one hole segment (61), and the hole segment (61) is arranged in a strip shape.

8.  The protective film (100) according to claim 7, wherein a hole width of the hole segment (61) is W, and a length of the hole segment (61) in its extension direction is L1, where W and L1 satisfy:

$$0.05\ mm \leq W \leq 0.5\ mm;$$

and

$$1.5\ mm \leq L1 \leq 3\ mm.$$

9.  The protective film (100) according to claim 7, wherein a number of hole segments (61) is multiple, and the multiple hole segments (61) intersect and communicate with each other.

10. The protective film (100) according to claim 7, wherein a number of hole segments (61) is two, and the two hole segments (61) are arranged in a cross shape.

11. The protective film (100) according to claim 6, wherein the first area (21) comprises a first sub-area (211) and a second sub-area (212) surrounding the first sub-area (211), and the second sub-area (212) is located between the first sub-area (211) and the second area (22); and
    wherein the ventilation hole (6) is located in the first sub-area (211).

12. The protective film (100) according to any one of claim 1 to claim 3, wherein a material of the first film layer (1) is one of polyethylene glycol terephthalate, polyethylene, and polyimide.

13. The protective film (100) according to any one of claim 1 to claim 3, wherein a material of the second film layer (3) is one of polyethylene glycol terephthalate, polyethylene, and polyimide.

14. The protective film (100) according to any one of claim 1 to claim 3, wherein a material of the first film layer (1) is one of polyethylene glycol terephthalate, polyethylene, and polyimide, and a material of the second film layer (3) is one of polyethylene glycol terephthalate, polyethylene, and polyimide.

15. A cover assembly, comprising:

   a top cover (7) provided with an installation hole (8);
   an explosion-proof valve (9) disposed in the installation hole (8); and
   the protective film (100) of any one of claim 1 to claim 12, wherein the protective film (100) is covered on the installation hole (8), and the second area (22) of the adhesive layer (2) is connected to the top cover (7).

16. A battery cell, comprising the cover assembly of claim 15.

100

6

1

FIG. 1

6

3

2

1

FIG. 2

FIG. 3

FIG. 4

FIG. 5

FIG. 6

FIG. 7

# EP 4 693 676 A1

## INTERNATIONAL SEARCH REPORT

| International application No. |
|---|
| **PCT/CN2024/112005** |

### A. CLASSIFICATION OF SUBJECT MATTER

H01M 50/164(2021.01)i;  B32B7/12(2006.01)i

According to International Patent Classification (IPC) or to both national classification and IPC

### B. FIELDS SEARCHED

Minimum documentation searched (classification system followed by classification symbols)

IPC:  H01M,  B32B

Documentation searched other than minimum documentation to the extent that such documents are included in the fields searched

Electronic data base consulted during the international search (name of data base and, where practicable, search terms used)

CNTXT, WPABS, DWPI, ENTXT, ENTXTC, PATENTICS, CJFD: 电池, 防爆, 泄压, 保护, 膜, 粘, 黏, 胶, 区域, 分区, 环绕, 包围, 围绕, 外周, 外圈, 中心, 中央, 中间, 暴露, 露出, battery, cell, protect+, film, explos+, pressure, proof, glue, stick+, center, middle, area, outer

### C. DOCUMENTS CONSIDERED TO BE RELEVANT

| Category* | Citation of document, with indication, where appropriate, of the relevant passages | Relevant to claim No. |
|---|---|---|
| X | CN 111696905 A (SAMSUNG DISPLAY CO., LTD.) 22 September 2020 (2020-09-22) description, paragraphs 73-120, and figures 1-13 | 1-5, 12-14 |
| Y | CN 111696905 A (SAMSUNG DISPLAY CO., LTD.) 22 September 2020 (2020-09-22) description, paragraphs 73-120, and figures 1-13 | 6-11, 15-16 |
| Y | CN 219937194 U (ENVISION POWER TECHNOLOGY (JIANGSU) CO., LTD. et al.) 31 October 2023 (2023-10-31) description, paragraphs 40-51, and figures 1-11 | 6-11, 15-16 |
| X | JP 2015157461 A (LINTEC CORP.) 03 September 2015 (2015-09-03) description, specific embodiments, and figures 1a, 1c, 1d, and 2c | 1-5, 12-14 |
| Y | CN 208271960 U (SUNWODA ELECTRONIC CO., LTD.) 21 December 2018 (2018-12-21) description, specific embodiments, and figures 1-5 | 6-11, 15-16 |
| Y | CN 219937132 U (ENVISION POWER TECHNOLOGY (JIANGSU) CO., LTD. et al.) 31 October 2023 (2023-10-31) description, specific embodiments, and figures 1-11 | 6-11, 15-16 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 December 2024** | **23 December 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/112005** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 203617357 U (ZHEJIANG ZENTIN NEW ENERGY CO., LTD.) 28 May 2014 (2014-05-28) <br> entire document | 1-16 |
| A | CN 220456585 U (HEFEI GUOXUAN HIGH-TECH POWER ENERGY CO., LTD.) 06 February 2024 (2024-02-06) <br> entire document | 1-16 |

Form PCT/ISA/210 (second sheet) (July 2022)

International application No.

**PCT/CN2024/112005**

| Patent document cited in search report | | | Publication date (day/month/year) | Patent family member(s) | | | Publication date (day/month/year) |
|---|---|---|---|---|---|---|---|
| CN | 111696905 | A | 22 September 2020 | KR | 20200109409 | A | 23 September 2020 |
| | | | | KR | 102586063 | B1 | 06 October 2023 |
| | | | | US | 2020290325 | A1 | 17 September 2020 |
| | | | | US | 11597190 | B2 | 07 March 2023 |
| CN | 219937194 | U | 31 October 2023 | | None | | |
| JP | 2015157461 | A | 03 September 2015 | JP | 6334197 | B2 | 30 May 2018 |
| CN | 208271960 | U | 21 December 2018 | | None | | |
| CN | 219937132 | U | 31 October 2023 | | None | | |
| CN | 203617357 | U | 28 May 2014 | | None | | |
| CN | 220456585 | U | 06 February 2024 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202421134766